# EUROPÄISCHE PATENTSCHRIFT

(11) **EP 0 929 845 B1**
(45) Veröffentlichungstag und Bekanntmachung des Hinweises auf die Patenterteilung: **13.11.2002**
(21) Anmeldenummer: 98937428.5
(22) Anmeldetag: 29.05.1998
(51) Int. Cl.: G05B 11/42

(54) **INTELLIGENTE STEUER- UND REGELEINRICHTUNG**
INTELLIGENT CONTROL AND ADJUSTMENT DEVICE
DISPOSITIF INTELLIGENT DE COMMANDE ET DE REGULATION

(30) Priorität: 02.06.1997 DE 29709588 U
(43) Veröffentlichungstag der Anmeldung: 21.07.1999
(73) Patentinhaber: PS Automation GmbH Für Gesellschaft Antriebstechnik, 67090 Bad Dürkheim (DE)
(72) Erfinder: SCHMIDHUBER, Max, D-67090 Bad Dürkheim (DE)
(74) Vertreter: Goroll, Peter
(86) Internationale Anmeldenummer: EP9803205
(87) Internationale Veröffentlichungsnummer: WO98054627

(56) Entgegenhaltungen:
- EP-A- 0 535 340
- DE-A- 3 623 651
- US-A- 3 882 368
- US-A- 5 099 183
- KANDA Y ET AL: "ADVANCED CONTROLLER EQUIPPED WITH A MEMORY CARD" ADVANCES IN INSTRUMENTATION AND CONTROL, Bd. 46, Nr. PART 02, 1. Januar 1991, Seiten 1567-1578, XP000347586

## Beschreibung

Die Erfindung betrifft eine intelligente Steuer- und regeleinrichtung , gemäß dem Oberbegriff des Patentanspruchs 1.

Bei Stellantrieben, wie sie in der Prozeßtechnik Anwendung finden, sendet ein im Prozeßfeld angeordneter Sensor ein den gegenwärtigen Zustand des Prozesses charakterisierendes Signal an einen Zentralregler, der beispielsweise in einer Schaltwarte oder einer ähnlichen Prozeßleiteinrichtung angeordnet ist.

Der Zentralregler vergleicht diesen Prozeßistwert mit einem eingestellten Prozeßsollwert. In Auswertung dieses Vergleiches wird ein entsprechendes Stellsignal an den Stellantrieb gesendet. Im Stellantrieb ist ein Stellungregler angeordnet, der das Stellsignal vom Zentralregler erhält und dieses in eine dem Stellsignal proportionale Hubstellung oder Drehwinkel umwandelt, die dem Stellorgan über einen Elektromotor zugeführt wird.

Solche Regelungen sind insbesondere, wenn viele Meß- und Regelpunkte vorhanden sind, sehr teuer und aufwendig, da zahlreiche Einzelgeräte auch eine umfangreiche Verkabelung notwendig machen.

Um eine aufwendige Verkabelung zwischen Stellantrieb und Zentralregler, die stets örtlich getrennt sind, zu vermeiden, ist aus der DE 39 28 451 A1 eine Vorrichtung zur Regelung und Steuerung eines elektrischen Antriebssystems bekannt, bei welchem mit dem Motor im gleichen Gehäuse Vorrichtungen zur Lageerkennung und Drehzahlerfassung, zur elektronischen Kommutierung, zur Steuerung und Regelung und zur Bewerkstelligung der Kommunikation untergebracht sind.

Nachteilig ist dabei , das bei einer Vielzahl von Regelkreisen und bei sehr schnellen Regelungen der Rechner der Prozeßleitzentrale nicht schnell genug alle Regelgrößen zyklisch abfragen und deren Istwerte bearbeiten kann, so daß es zu unerwünschten Verzögerungen kommt und die Regelgüte entsprechend abnimmt.

Aus der DE 36 23 651 A1 ist eine Schaltungsanordnung zur Ermittlung eines elektrischen Sollwertes für ein Stellglied einer Regel- und Steuerstrecke bekannt. Das Stellglied, ein elektromagnetisches Wegeventil, ist in der Kraftstoffleitung eines Kraftfahrzeuges angeordnet und weist zur stetigen Verstellung einen Elektromagneten auf. Die Durchflußmenge des durch die Kraftstoffleitung beförderten Kraftstoffes wird durch das Stellglied gesteuert, indem der Stellweg des Stellgliedes in Abhängigkeit verschiedener Parameter veränderbar ist. Zum Zwecke dieser Steuerung ist ein Mikroprozessor mit Sensoren verbunden, welche verschiedene Betriebsparameter anzeigen. Zur Bestimmung des Stellungssollwertes für den Stellantrieb werden den Sensorsignalen in einem Speicher abgespeicherte Tabellenwerte zugeordnet, welche zu einem Gesamtwert addiert werden. Diesem Gesamtwert wird ein ebenfalls in einer Tabelle enthaltener Stellungsollwert zugeordnet, welcher einen Strommittelwert repräsentiert und durch einen Regler mit einem Stromistwert verglichen wird. In Abhängigkeit dieses Vergleichs wird ein getaktetes Steuersignal für einen den Stellantrieb antreibenden Motor erzeugt.
Zur Erstellung eines unabhängigen Systems wird dabei auf einen Prozeßregelkreis vollständig verzichtet.

Die EP 0 535 340 A1 zeigt einen Regler, in welchen ein Prozeßsollwert eingegeben wird. Zur Realisierung verschiedener Anzeigemöglichkeiten ist der Regler parametrierbar gestaltet.

Der Erfindung liegt somit die Aufgabe zu gründe, eine Steuer- und Regeleinrichtung anzugeben, welche zuverlässig und schnell auf veränderte Prozeßbedingungen, insbesondere veränderte Umgebungsbedingungen reagiert.

Erfindungsgemäß wird die Aufgabe durch die Merkmale des Kennzeichens des Patentanspruchs 1 gelöst.

Der Vorteil der Erfindung besteht darin, daß der Prozeßregler selbst baulich mit dem Stellantrieb verbunden ist. Er bildet somit ein unabhängiges System. Damit verbunden ist eine Entlastung der Prozeßleitzentrale sowie eine Verringerung des Installationsaufwandes.
Unter der Voraussetzung, daß der Istwert der Regelgröße, d.h. das Ausgangssignal des externen Sensors direkt mit dem Stellantrieb verbunden ist, berechnet der integrierte Prozeßregler selbständig seine Stellgröße und kann ohne Verzögerung auf den Stellantrieb einwirken, wodurch kurze Zykluszeiten realisierbar sind.

Da der Prozeßregler frei parametrierbar ist, kann das Steuerund Regelverhalten jederzeit verändert und auf neue Anwendungen eingestellt werden.

In einer Weiterbildung ist der Prozeßregler Bestandteil eines Leistungsmoduls, welches über ein Schnittstellenmodul bidirektional mit einer übergeordneten Steuereinrichtung verbunden ist. Somit besteht die Möglichkeit, daß sich die Prozeßleiteinrichtung auf die Anzeige von Daten und die Vorgabe von Führungsgrößen und Sollwerten beschränkt.

Neben dem Prozeßregler weist das Leistungsmodul eine Hilfsenergiesteuerung auf und ist über Eingänge mit internen, antriebsspezifische Daten erfassenden Sensoren und den externen, prozeßspezifische Daten liefernden Sensoren verbunden. Die Integration dieser Elemente führt zu einer Kostensenkung und erhöhter Zuverlässigkeit der Regelung.

In einer Ausgestaltung ist das Schnittstellenmodul steckbar ausgebildet. Das hat den Vorteil, daß die Steuer- und regeleinrichtung den Kommunikationsbedingungen mit der Prozeßleiteinrichtung leicht angepaßt werden kann, was durch Auswechseln des gewünschten Schnittstellenmoduls erfolgt.

Der Datenaustausch mit der übergeordneten Steuereinrichtung kann einfach mittels analoger oder binärer Signale erfolgen. Bei einem entsprechend ausgebildeten Schnittstellenmodul ist auch eine serielle Datenübertragung über einen Datenbus möglich.
Bei der Verwendung eines konventionellen Schnittstellenmoduls weist dieses zur Herstellung der elektrischen Verbindung zwischen Schnittstellenmodul und der Umgebung mindestens ein potentialfreies Relais auf.

Der modulare Aufbau erlaubt die Verwendung von standardisierten Systemen.

Vorteilhafterweise wird der Prozeßregler nach der erstmaligen Montage der einzelnen Module mit dem Stellantrieb mit den antriebsspezifischen Parametern parametriert.
Der Stellantrieb muß somit erst nach der Montage konfiguriert werden. Somit ist eine vereinfachte Inbetriebnahme der Regelung möglich. Der konkrete Anwendungsfall muß bei der Herstellung des Stellantriebes nicht bekannt sein.

Die Anpassung an konkreten Anwendungsbedingungen kann leicht per Software erfolgen, ohne daß ein Modul ausgetauscht werden muß.

In einer Ausgestaltung kann der Prozeßregler ein digitaler Regler in Form eines P, PI oder PID-Reglers sein.
Bei einem PID - Regler sind nach der erstmaligen Montage der Module am Stellantrieb Proportionalitätsbereich, Vorhalte- und Nachstellzeit unabhängig voneinander einstellbar.

Besonders einfach läßt sich die Parametrierung gestalten, wenn der Prozeßregler mit Hilfe eines Mikroprozessors realisiert ist.

Zur manuellen Steuerung des Stellantriebes und /oder zur Parametrierung von Antriebsfunktionen ist eine Bedieneinrichtung mit dem Leistungsmodul, insbesondere mit dem Prozeßregler verbunden.
Die Bedieneinrichtung kann dabei fest am Stellantrieb angebaut bzw. steckbar mit diesem verbunden sein.
Auch ist es möglich, die Bedieneinrichtung so auszubilden, daß eine stationäre Wandmontage in der Umgebung des Stellantriebes möglich ist. Die Bedieneinrichtung ist dann über ein Kabel mit dem Leistungsmodul verbunden.

Um die Betriebsbedingungen des Stellantriebs zu überwachen, ist der Prozeßregler mit internen Sensoren zur Überwachung der Antriebsposition und / oder der am Abtrieb des Stellantriebs abgegebenen Stellkräfte bzw. Drehmomente verbunden.

Der Prozeßregler wirkt über die Hilfsenergiesteuerung auf die Hilfsenergieeinrichtung ein.
Ist die Hilfsenergieeinrichtung ein elektronisch angesteuerter Elektromotor, vorzugsweise ein DC - Motor, so läßt sich die Drehmoment- oder Stellkrafterfassung in einfacher Weise über die Messung des Motorstromes realisieren.

Die Hilfsenergieeinrichtung ist aber nicht auf Elektromotoren beschränkt. So sind Hydraulik- oder Pneumatikeinrichtungen ebenfalls vorstellbar.

In einer Weiterbildung sind im Leistungsmodul interne, antriebsspezifische Daten zu Diagnosezwecken unverlierbar in einem Speicher abgespeichert . Eine Selbstdiagnose erfolgt durch die laufende Überwachung dieser Daten und erlaubt eine schnelle Reaktion auf auftretende Fehler. Auch ist es dadurch möglich, die Fehlerquelle rasch zu identifizieren.

Die abgespeicherten internen, antriebsspezifischen Daten werden mittels einer im Leistungsmodul integrierten serielle Schnittstelle oder über das Schnittstellenmodul via Datenbus ausgelesen.

Über die serielle Schnittstelle im Leistungsmodul ist ebenfalls ein Einlesen von Antriebsparametern möglich.

Vorteilhafterweise werden die von internen und externen Sensoren gemessenen Werte im Leistungsmodul als Prozeßkenngrößen berechnet und zur Weiterverarbeitung über das Schnittstellenmodul an die übergeordnete Steuereinrichtung weitergeleitet.

Zur Verbesserung der Regelgüte ist eine Regelkorrekturgröße in Form einer Tabelle oder eines Kennlinienfeldes im Leistungsmodul abgespeichert.

Die Erfindung läßt zahlreiche Ausführungsformen zu. Eine davon soll anhand der in der Zeichnung schematisch dargestellten Figuren näher erläutert werden.

Es zeigt :
- Figur 1:: Prinzipdarstellung eines Stellantriebes
- Figur 2:: Darstellung der Antriebselektronik
- Figur 3:: Darstellung des Leistungsmoduls der Antriebselektronik
- Figur 4:: Ausführung des Prozeßreglers durch einen Mikroprozessor

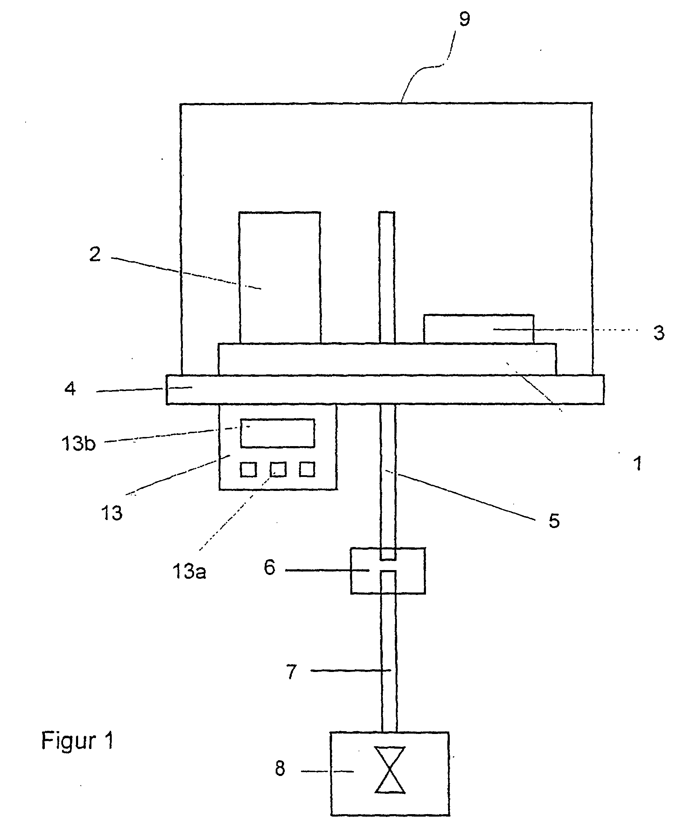

Figur 1 zeigt die vereinfachte Darstellung eines Stellantriebes für eine Ventilsteuerung , wie er normalerweise in der Prozeßtechnik für strömende Stoffe und Medien z.B. in der Wasser- oder Abwassertechnik, der chemischen Industrie oder der Kraftwerkstechnik eingesetzt wird.

Auf einer Trägerplatte 1 ist ein Elektromotor 2 angeordnet. Über ein Getriebe 4 betätigt der Elektromotor 2 die Antriebsstange 5 des Stellantriebes entsprechend den Ansteuersignalen einer Antriebselektronik 3.

Elektromotor 2 und die Antriebselektronik 3 einschließlich Trägerplatte 1 sind dabei in einem Gehäuse 9 angeordnet, welches von dem Getriebe 4 abgeschlossen wird.

Die Antriebselektronik 3 ist dabei baulich mit dem Stellantrieb verbunden.
Üblicherweise ist die Antriebselektronik 3 im Stellantrieb angeordnet. Sie kann aber auch außen am Stellantrieb angebaut sein.

Die Antriebsstange 5 weist ein Verbindungsteil 6 auf, in welches die Betätigungsstange 7 des zu stellenden Ventils 8 eingreift und die Bewegung des Stellantriebs übernimmt. Der Stellantrieb kann Hub- oder Drehbewegungen ausführen.

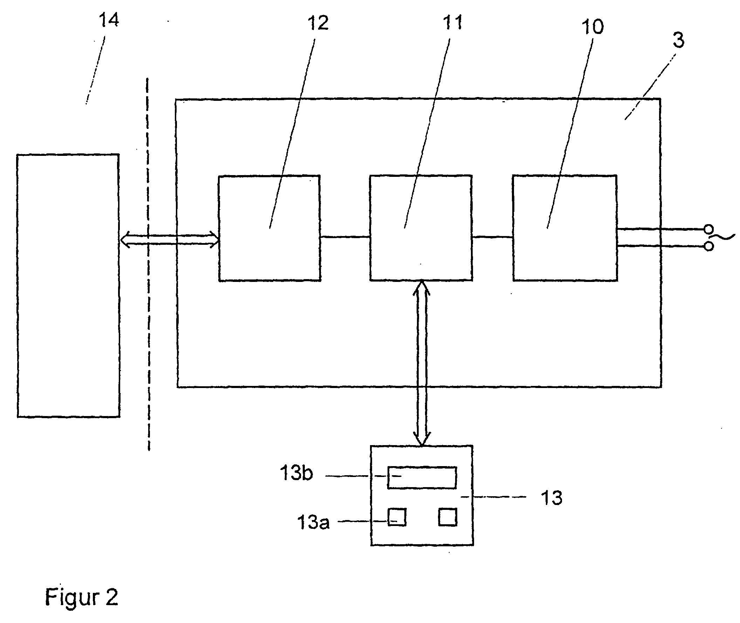

Die Antriebselektronik 3 ist modular aufgebaut und besteht gemäß Figur 2 aus folgenden Bauteilen:
einem Netzspannungstransformator 10 zur Spannungversorgung des Stellantriebes,
einem Leistungsmodul 11 zur Durchführung der Prozeßregelung und zur Ansteuerung des Elektromotors 2
sowie einem Schnittstellenmodul 12 zur Anbindung des Stellantriebs an ein Prozeßleitsystem 14.

Eine Bedieneinrichtung 13 ist außerhalb des Stellantriebes angeordnet und dient zur manuellen Antriebssteuerung. Sie kann aber auch zur Parametrierung von Antriebsfunktionen genutzt werden.
Die Bedieneinrichtung ist vorteilhafterweise außen am Stellantrieb selbst angebaut (Figur 1). Sie kann dabei fest montiert sein oder aber steckbar ausgebildet sein.
Es ist aber auch vorstellbar, die Bedieneinrichtung 13 fernsteuerbar zu gestalten, indem am Stellantrieb ein Empfänger für drahtlose Signale, z. B. Infrarotsignale, angeordnet ist.

In einer anderen Ausgestaltung ist das Bedienteil 13 beweglich über ein nicht weiter dargestelltes Kabel mit der Antriebselektronik 3 verbunden.

Die Antriebselektronik 3, speziell das Leistungsmodul 11 ist in jedem Fall über eine bidirektionale Datenleitung mit der Bedieneinrichtung 13 verbunden. Diese Bedieneinrichtung 13 weist eine Tastatur 13a und ein Display 13b auf und dient dem Nutzer dazu direkt am Stellantrieb auf diesen einzuwirken und alle wesentlichen Funktionen des Stellantriebes auszuführen.

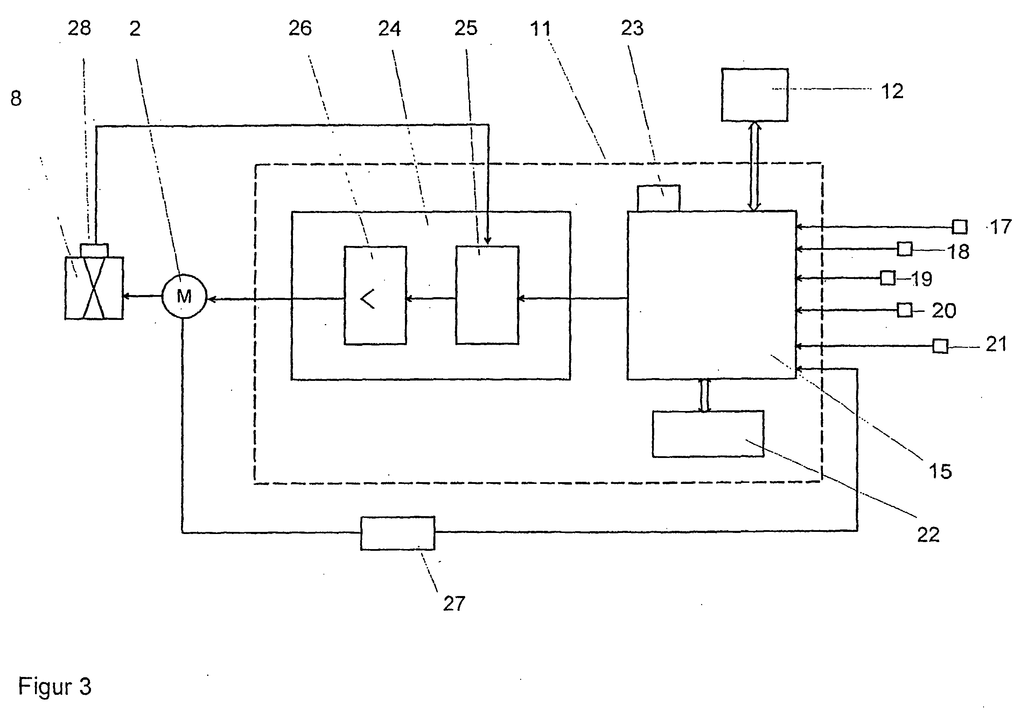

In Figur 3 ist der Aufbau des Leistungsmoduls 11 dargestellt.
Es besteht aus einem Prozeßregler 15, der Eingänge aufweist, über welche er mit externen , prozeßspezifische Daten liefernden Sensoren verbunden ist. Dies sind ein Temperatursensor 17, ein Drucksensor 18 und ein Durchflußmesser 19.
Der Prozeßregler 15 kann aber auch mit einem externen Sensor verbunden sein, welcher zur Verschleißmessung am Ventil (8) dient.

Desweiteren sind an die Eingänge des Prozeßreglers 15 interne Sensoren angeschlossen, die das Betriebsverhalten des Stellantriebes charakterisierende Daten messen. Dazu gehört ein Motortemperatursensor 20 und eine Innenraumtemperaturmeßeinrichtung 21 des Stellantriebes.
Der Prozeßregler 15 weist einen Speicher 22 auf ,in dem Prozeßparameter und Betriebsparameter abgespeichert werden. Der Speicher 22 ist als EEPROM ausgebildet. Der Prozeßregler 15 ist über eine bidirektionale Datenleitung mit dem Speicher 22 verbunden.

Eine serielle Schnittstelle 23 erlaubt die Kommunikation des Leistungsmoduls 11 mit einem Personalcomputer oder Laptop.

Der Ausgang des Prozeßreglers 15 ist mit einer Motorsteuerung 24 verbunden. Diese Motorsteuerung 24 enthält einen Stellungsregler 25, der über eine Endstufe 26 auf den Elektromotor 2 einwirkt.

In einer besonders komfortablen Ausführung des Prozeßreglers 15 kann auf den Stellungsregler verzichtet werden, da seine Funktion vom Prozeßregler selbst ausgeführt wird. Der Regler wirkt dabei in Abhängigkeit der externen Sensorsignale direkt auf den Motor ein.

Im vorliegenden Fall wird ein elektronisch kommutierter DC - Motor verwendet. Er ist mit einer Motorstrommeßvorrichtung 27 verbunden, welche an einen Eingang des Prozeßregler 15 führt. Der Prozeßregler 15 errechnet aus dem gemessenen Motorstromwert das Drehmoment oder die Stellkraft am Abtrieb des Stellantriebes.

Die Prozeßregelung im Stellantrieb erfolgt folgendermaßen. Über die Schnittstelle 12 wird dem Prozeßregler 15 von der Prozeßleiteinrichtung 14 über ein Bussystem eine Führungsgröße, z.B. der Prozeßsollwert zugeführt. Aus den von den Sensoren 17, 18, 19 zugeführten Signale wird ein Prozeßistwert bestimmt und mit dem Prozeßsollwert verglichen. Für den Fall, daß die Sensorsignale den Prozeßistwert darstellen, wird dieser mit dem Prozeßsollwert verglichen und daraus ein Stellungssollwert für den Stellungsregler 25 berechnet.

Der Stellungsregler 25 sorgt für die Proportionalität zwischen dem Stellungssollwert und dem Drehwinkel bzw. dem Hub des Ventils 8.
Der Stellungsregler 25 vergleicht dabei ständig das elektrische Eingangssignal, das vom Prozeßregler 15 geliefert wird mit dem Istwert der Ventilstellung.
Der Istwert der Ventilstellung wird durch einen im Stellantrieb an der Antriebsstange 5 angeordneten Sensor 28 , vorzugsweise einem Potentiometer, bestimmt, dessen Signal auf den Stellungsregler 25 rückgeführt ist.

Die Regelung bestimmt die Geschwindigkeit, Kraft bzw. das Drehmoment und die Position des Abtriebes vom Stellantrieb in Abhängigkeit der Sollwertvorgabe und der Sensormeßwerte.

Die Prozeßleiteinrichtung 14 liefert an den Stellantrieb nur noch das Sollsignal bzw. Führungssignal und nimmt Anzeigefunktionen über den Zustand der einzelnen Regelkreise war. Im Stellantrieb selbst wird die Stellgröße berechnet, die als Stellsignal an den Stellungsregler 25 zur Ansteuerung des Motor 2 weitergeleitet wird.

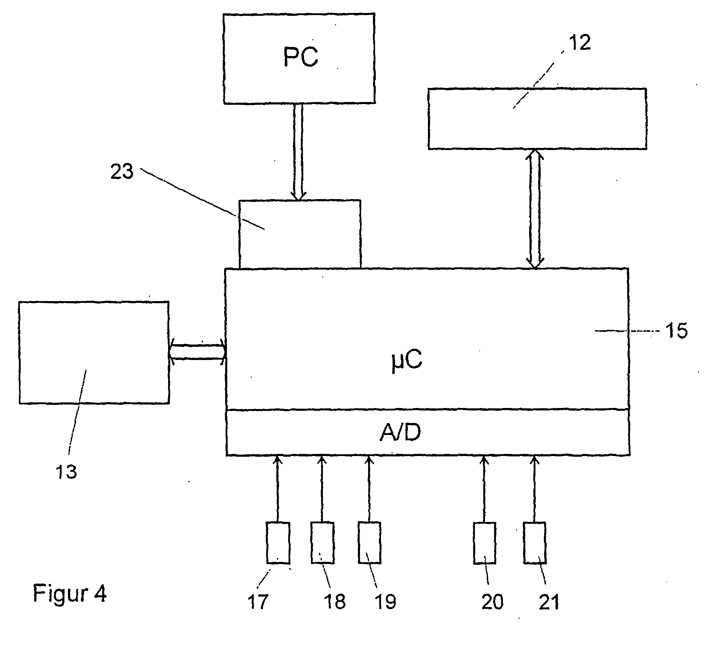

In einer vorteilhaften Gestaltung ist der Prozeßregler 15 durch einen Mikroprozessor mit einer frei parametrierbaren Software realisiert, wie es in Figur 4 dargestellt ist.

Mit Hilfe des Mikroprozessors läßt sich einfach ein PID-Regler realisieren. Dieser PID - Regler ist für die beschriebene Regelaufgabe besonders geeignet.

Bei einer kontinuierlichen Positionierung erzeugt der PID-Regler den Stellungssollwert für den Stellantrieb im Stellantrieb selbst. Dieser Sollwert wird mit dem Istwert der Stellung verglichen. Das hieraus resultierende Differenzsignal ist das Maß für die Ansteuerung des Motors. Der Motor wird so lange angesteuert, bis das Differenzsignal nahezu 0 geworden ist. Durch dieses Prinzip folgt der Antrieb dem Sollwert schon bei kleinsten Abweichungen kontinuierlich nach und ist ständig im Eingriff.

Zur Abspeicherung von Prozeß-und Betriebsparametern ist der Speicher 22 im Mikroprozessor angeordnet. Er kann aber auch außerhalb des Mikroprozessors angeordnet sein und über eine bidirektionale Datenleitung mit diesem verbunden werden.

Zu den zu Diagnosezwecken gespeicherten Betriebsparametern gehören Betriebsdaten wie die Einschaltzeit und die Schalthäufigkeit des Motors. Weiter werden die 10 letzten Meßwerte der externen und internen Sensoren gespeichert. Weitere diagnosefähige Daten sind die Motortemperatur ,der Motorstrom, die Gehäusetemperatur, die Antriebsposition. Eine Eigenüberwachung der Elektronik sowie die Registrierung der Betriebszeit des Motors unter bestimmten kritischen Bedingungen erlaubt eine vorbeugende Wartung.

Zur Diagnose werden diese Daten über die serielle Schnittstelle 23 oder die Feldbusschnittstelle 12 ausgelesen.

Grundsätzlich werden die an den Eingängen des Mikroprozessors 15 anliegenden Meßwerte der externen und internen Sensoren zyklisch abgefragt. Werden kritische Meßwerte detektiert, werden automatisch Sicherheitsstellungen angefahren bzw. potentialfreie Relaiskontakte zur Signalisation des kritischen Zustandes geschaltet.

Im Speicher 22 sind Daten zur Kennlinienkorrektur der Antriebssteuerung hinterlegt. Dies kann in Form einer Tabelle oder als Kennlinie geschehen.

Aus den mit Hilfe der interen und externen Sensoren gemessenen Werten werden Prozeßkenngrößen berechnet, die zur Weiterverarbeitung , beispielsweise zur Anzeige an das Prozeßleitsystem 14 über das Schnittstellenmodul 11 gesendet werden .

Der P, PI oder PID Regler kann durch Verknüpfung mit den externen Sensoreingängen und den internen Sensoren als unabhängiger Festwertregler arbeiten.
Er kann aber auch als ein von der Prozeßleiteinrichtung 14 analog oder digital geführter Prozeßregler verwendet werden.

Der modulare Aufbau der Steuer- und Regeleinrichtung erlaubt auch eine besonders wirtschaftliche Herstellung des Stellantriebs.
Auf Grund der Verwendung eines Mikroprozessors mit frei parametrierbarer Software ist es möglich, erst nach der vollständigen Montage des Stellantriebes mit der Steuer- und Regelungseinrichtung diesen zu parametrieren.
Die antriebsspezifische Parametrierung erfolgt dabei beim Hersteller des Stellantriebes.
Über das Schnittstellenmodul 12 oder über die serielle Schnittstelle 23 werden so auch die für den PID-Regler grundsätzlichen Parameter in den Speicher 22 des Mikroprozessors 15 geladen.

Für eine kontinuierliche PID-Regelung sind der Proportionalitätsbereich, die Vorhalte- und Nachstellzeit frei einstellbaren Parameter. Diese Parameter werden beim Hersteller in Abhängigkeit vom Antriebstyp unabhängig voneinander eingestellt und abgespeichert.
Die antriebsspezifischen Parameter sind unverlierbar gespeichert.

Vom Anwender können dann die anwendungsspezifischen Daten auf der Grundlage der antriebsspezifischen Daten erstellt und ebenfalls im Speicher 22 abgelegt werden. Die anwendungsspezifischen Parameter und andere eventuell abgelegte Parameter werden überschreibbar gespeichert.
So muß erst nach der mechanischen Zusammensetzung des Stellantriebs über den konkreten Einsatz entschieden werden.

Alle gespeicherten Parameter bleiben bei einem Netzausfall erhalten.

Die Parametrierung erfolgt dabei in einfacher Weise über einen PC.

Um nur autorisierten Personen die Möglichkeit zur Parametrierung zu gestatten, ist die Eingabe eines Identifizierungscodes notwendig. Dieser Code ist ebenfalls im Speicher 22 des Mikropozessors 15 abgelegt. Erst wenn der Mikroprozessor 15 den eingegebenen Code als richtig erkannt hat, kann die Dateneingabe erfolgen.

Es kommen Regelaufgaben in Betracht ,die mehrere Eingangsgrößen zur Regelung benötigen, die mit einem intelligenten Stellantrieb, welcher einen integriertem Prozeßregler und mehreren Analogeingänge für externe Sensoren aufweist, besonders komfortabel gelöst werden kann.

Zur Veranschaulichung sei hierfür eine Durchflußregelung genannt. Dabei wird der Druck vor und hinter dem Ventil 8 an genormten Meßpunkten mit Hilfe eines nicht weiter dargestellten Differenzdruckmeßumformers gemessen.
Die Ventilkennlinie ist unverlierbar im Speicher 22 abgelegt worden. Somit kann der Durchfluß aus dem Differenzdruck und dem gemessenen Ventilhub exakt berechnet werden, ohne daß ein spezieller Durchflußmesser erforderlich ist.

Im einfachsten Fall wird nun der Sollwert für die Ventilstellung direkt vom Prozeßleitsystem 14 vorgegeben und der vom Mikroprozessor 15 berechnete Durchfluß über das Schnittstellenmodul 11 und ein Bussystem an die Prozeßleiteinrichtung 14 gesendet und dort zur Anzeige gebracht.
Neben der Antriebsposition können auf diese Art und Weise auch Grenzwerte und Fehlermeldungen an die Prozeßleitzentrale 14 übermittelt werden.

Ebenso kann aber auch eine Führungsgröße bereitgestellt werden, die der Vorgabe für den gewünschten Durchfluß entspricht. In diesem Fall wird der Hub bzw. der Drehwinkel des Ventils 8 so lange verstellt, bis das Ergebnis der laufenden Berechnung mit der gewünschten Vorgabe übereinstimmt.

## Patentansprüche

1. Intelligente Steuer- und Regeleinrichtung zum Einsatz in einem Stellantrieb der Prozeßtechnik für strömende Stoffe und Medien, die einen eine Regelanordnung realsierenden Mikroprozessor aufweist, welcher auf der Grundlage von Sensorsignalen einen Stellungssollwert für ein Stellorgan des Stellantriebes bestimmt, wobei die Regelanordnung in Abhängigkeit des Stellungssollwertes über eine Hilfsenergieeinrichtung das Stellorgan ansteuert, **dadurch gekennzeichnet, daß** die Regelanordnung ein parametrierbaren Prozeßregler (15) ist, welcher gleichzeitig die Funktion eines Stellungsreglers (25) des Stellgliedes (8) ausführt und Regeleingangssignale von externen , prozeßspezifischen Sensoren (17, 18, 19) erhält und aus einem Vergleich eines von einer Prozeßleitzentrale (14) vorgegebenen Prozeßsollwertes und einem Prozeßistwert, der in Abhängigkeit der von den externen Sensoren (17, 18, 19) gelieferten Signale ermittelt wird, den Stellungssollwert bestimmt, wobei eine den Prozeßregler (15) enthaltende Antriebselektronik (3) im Gehäuse (9) des Stellantriebes integriert oder am Stellantrieb angebaut ist.

2. Intelligente Steuer- und Regeleinrichtung nach Anspruch 1, **dadurch gekennzeichnet, daß** der Prozeßregler (15) Bestandteil eines Leistungsmoduls (11) ist , welches über ein Schnittstellenmodul (12) bidirektional mit einer übergeordneten Steuereinrichtung (14) verbunden ist.

3. Steuer- und Regeleinrichtung nach Anspruch 2 **dadurch gekennzeichnet, daß** das Leistungsmodul (11) neben dem Prozeßregler (15) eine Hilfsenergiesteuerung (25) aufweist sowie über Eingänge mit internen, antriebsspezifische Daten erfassenden Sensoren (20, 21) und den externen, prozeßspezifische Daten liefernden Sensoren (17, 18, 19) verbunden ist.

4. Steuer- und Regeleinrichtung nach Anspruch 2 oder 3 **dadurch gekennzeichnet, daß** das Leistungsmodul (11) über einen modular ausgebildeten Netzspannungstransformator (10) mit Energie versorgt wird.

5. Steuer- und Regeleinrichtung nach Anspruch 2 **dadurch gekennzeichnet, daß** das Schnittstellenmodul (12) steckbar ausgestaltet ist.

6. Steuer- und Regeleinrichtung nach Anspruch 2 oder 5 **dadurch gekennzeichnet, daß** über das Schnittstellenmodul (12) der Datenaustausch mit der übergeordneten Steuereinrichtung (14) mittels analoger und/oder binärer Signale erfolgt.

7. Steuer- und Regeleinrichtung nach Anspruch 2 oder 5 **dadurch gekennzeichnet, daß** über das Schnittstellenmodul (12) der Datenaustausch mit der übergeordneten Steuereinrichtung (14) durch serielle Datenübertragung über einen Datenbus erfolgt.

8. Steuer- und Regeleinrichtung nach Anspruch 2 **dadurch, gekennzeichnet, daß** das Schnittstellenmodul (12) zur Herstellung der elektrischen Verbindung mit der Umgebung ein potentialfreies Relais aufweist.

9. Steuer- und Regeleinrichtung nach einem der vorhergehenden Ansprüche **dadurch gekennzeichnet, daß** der Prozeßregler (15) nach der erstmaligen Montage der Module (10,11,12) mit dem Stellantrieb mit antriebsspezifischen Daten parametriert wird.

10. Steuer- und Regeleinrichtung nach Anspruch 9 **dadurch gekennzeichnet, daß** der Prozeßregler (15) ein P, PI oder PID - Regler ist.

11. Steuer- und Regeleinrichtung nach Anspruch 10 **dadurch gekennzeichnet, daß** bei einem PID - Regler Proportionalitätsbereich , Vorhalte- und Nachstellzeit unabhängig voneinander nach der erstmaligen Montage einstellbar sind.

12. Steuer- und Regeleinrichtung nach Anspruch 9, 10 oder 11 **dadurch gekennzeichnet, daß** der Prozeßregler (15) durch einen Mikroprozessor realisiert ist.

13. Steuer- und Regeleinrichtung nach Anspruch 1 **dadurch gekennzeichnet, daß** eine Bedieneinrichtung (13) zur manuellen Steuerung des Stellantriebes und/oder zur Parametrierung von Antriebsfunktionen mit dem Leistungsmodul (11), insbesondere dem Prozeßregler (15) verbunden ist.

14. Steuer- und Regeleinrichtung nach Anspruch 13 **dadurch gekennzeichnet, daß** die Bedieneinrichtung (13) am Stellantrieb angebaut ist.

15. Steuer- und Regeleinrichtung nach Anspruch 13 **dadurch gekennzeichnet, daß** die Bedieneinrichtung (13) steckbar mit dem Stellantrieb verbunden ist.

16. Steuer- und Regeleinrichtung nach Anspruch 13 **dadurch gekennzeichnet, daß** die Bedieneinrichtung (13) zur stationären Wandmontage vorgesehen ist und über ein Kabel mit dem Leistungsmodul (11) verbunden ist.

17. Steuer- und Regeleinrichtung nach Anspruch 3 **dadurch gekennzeichnet, daß** der Prozeßregler (15) mit internen Sensoren (20, 21) zur Überwachung der Antriebsposition und/ oder der am Abtrieb des Stellantriebs abgegebenen Stellkräfte oder Drehmomente verbunden ist.

18. Steuer- und Regeleinrichtung nach Anspruch 3 **dadurch gekennzeichnet, daß** der Prozeßregler (15) über die Hilfsenergiesteuerung (24) auf die Hilfsenergieeinrichtung (2) einwirkt.

19. Steuer- und Regeleinrichtung nach Anspruch 18 **dadurch gekennzeichnet, daß** die Hilfsenergieeinrichtung (2) ein elektronisch angesteuerter Motor ist.

20. Steuer- und Regeleinrichtung nach Anspruch 19 **dadurch gekennzeichnet, daß** der Motor (2) ein DC-Motor ist, wobei die Drehmoment- oder Stellkrafterfassung über den Motorstrom erfolgt.

21. Steuer- und Regeleinrichtung nach Anspruch 18 **dadurch gekennzeichnet, daß** die Hilfsenergieeinrichtung (2) eine Pneumatikeinrichtung ist.

22. Steuer- und Regeleinrichtung nach Anspruch 18 **dadurch gekennzeichnet, daß** die Hilfsenergieeinrichtung (2) eine Hydraulikeinrichtung ist.

23. Steuer- und Regeleinrichtung nach einem der vorhergehenden Ansprüche **dadurch gekennzeichnet, daß** das Leistungsmodul (11) interne, antriebsspezifische Daten zu Diagnosezwecken unverlierbar in einem Speicher (22) abspeichert.

24. Steuer- und Regeleinrichtung nach Anspruch 23 **dadurch gekennzeichnet, daß** die abgespeicherten internen, antriebsspezifischen Daten mittels einer in dem Leistungsmodul (11) integrierten seriellen Schnittstelle (23) oder über das Schnittstellenmodul (12) via Datenbus ausgelesen werden.

25. Steuer- und Regeleinrichtungnach Anspruch 23 **dadurch gekennzeichnet, daß** Antriebsparameter über die im Leistungsmodul (11) integrierte Schnittstelle (23) eingelesen werden.

26. Steuer- und Regeleinrichtung nach Anspruch 3 **dadurch gekennzeichnet, daß** die von internen (20,21) und externen Sensoren (17, 18, 19) gemessenen Werte im Leistungsmodul (11) als Prozeßkenngrößen berechnet und zur Weiterverarbeitung über das Schnittstellenmodul (12) an die übergeordnete Steuereinrichtung (14) weitergeleitet werden.

27. Steuer- und Regeleinrichtung nach Anspruch 2 **dadurch gekennzeichnet, daß** im Leistungsmodul (11) zur Verbesserung der Regelgüte Korrekturdaten abgespeichert sind.

28. Steuer- und Regeleinrichtung nach einem der vorhergehenden Ansprüche **dadurch gekennzeichnet, daß** nach der Montage des Stellantriebs an das Stellorgan (8) ein automatischer Initialisierungslauf erfolgt, bei welchem der Stellantrieb auf das Stellorgan (8) , insbesondere zur Endlagenerfassung, abgestimmt wird.

## Claims

1. An intelligent control and regulating device for use in regulating the flow of materials, and comprising:
an actuator operatively associated with a means for controlling the flow of said materials, said actuator having a housing;
a parameterable process controller (15) as an intelligent control and regulating device, which receives input signals for regulation from external sensors (17, 8, 19) supplying process-specific data, and which controls said actuator from an auxiliary energy unit in response to said signals from said sensors,
wherein said controller is integrated within the housing of the actuator or attached onto the housing of the actuator.

2. An intelligent control and regulating device for use in regulating the flow of materials, and comprising:
an actuator operatively associated with a means for controlling the flow of said materials, said actuator having a housing;
a parameterable process controller (15) as an intelligent control and regulating device, which receives input signals for regulation from external sensors (17, 8, 19) supplying process-specific data, and which controls said actuator from an auxiliary energy unit in response to said signals from said sensors,
wherein said controller is integrated into the housing of the actuator or attached to the actuator, and
wherein said process controller (15) is part of a power module (11), and further including an interface module (12) bi-directionally connecting a central control unit (14) with said process controller (15).

3. An intelligent control and regulating device according to Claim 30, wherein said power module (11) has, besides the process controller (15), an auxiliary energy control (25) and is connected through inlets to internal sensors (20, 21) supplying actuator-specific data, and to external sensors (17, 18, 19) supplying process-specific data.

4. An intelligent control and regulating device according to Claim 30, including a modular mains transformer for supplying energy to the power module (11).

5. An intelligent control and regulating device according to Claim 30, wherein the interface module (12) is a plug-in unit.

6. An intelligent control and regulating device according to Claim 30, wherein the interface module (12) is adapted to transfer data to the central control unit (14) using analogue and/or binary signals.

7. An intelligent control and regulating device according to Claim 30, wherein using the interface module (12), data is exchanged with the central control unit (14) by a serial data transfer using a data bus.

8. An intelligent control and regulating device according to Claim 30, wherein the interface module (12) is connected to the surroundings electrically using a potential-free relay.

9. An intelligent control and regulating device according to Claim 29, wherein the process controller (15) is adapted to be parameterized with actuator-specific data after the initial assembly of the modules (10, 11, 12) with the actuator.

10. An intelligent control and regulating device according to Claim 37, wherein the process controller (15) is a P, PI or PID controller.

11. An intelligent control and regulating device according to Claim 38, wherein a PID controller is provided for setting the proportionate range, holding and adjusting times independently of each other, subsequent to initial assembly.

12. An intelligent control and regulating device according to Claims 37, wherein the process controller (15) is a microprocessor.

13. An intelligent control and regulating device according to Claim 29, wherein an operating panel (13) for manual control of the actuator and/or parametering of the actuator functions is connected to the power module (11).

14. An intelligent control and regulating device according to Claim 41, wherein the operating panel (13) is attached to the actuator.

15. An intelligent control and regulating device according to Claim 41, wherein the operating panel (13) is connected to the actuator by a plug-in connection.

16. An intelligent control and regulating device according to Claim 41, wherein the operating panel (13) is adapted for permanent wall fixing and is connected by cable to the power module (11).

17. An intelligent control and regulating device according to Claim 31, wherein the process control (15) is connected either to internal sensors (20, 21) for monitoring the actual position and/or the actuating forces or torques exerted at the output of the actuator.

18. An intelligent control and regulating device according to Claim 31, wherein the process controller (15) acts upon the auxiliary energy control (24) using the auxiliary energy unit (2).

19. An intelligent control and regulating device according to Claim 46, wherein the auxiliary energy unit (2) is an electronically regulated motor.

20. An intelligent control and regulating device according to Claim 47, wherein the motor (2) is a DC motor and the torques and nominal force are calculated from the motor current.

21. An intelligent control and regulating device according to Claim 46, wherein the auxiliary energy unit (2) is a pneumatic unit.

22. An intelligent control and regulating device according to Claim 46, wherein the auxiliary energy unit (2) is a hydraulic unit.

23. An intelligent control and regulating device according to Claim 29, wherein, the power module (11) has stored internal actuator-specific data in a non-erasable memory bank (22) so that they can be diagnosed.

24. An intelligent control and regulating device according to Claim 51, wherein the stored internal, actuator-specific data can be read using either an integrated serial interface (23) integrated into the power module (11) or an interface module (12) through the data bus.

25. An intelligent control and regulating device according to Claim 30, wherein the actuation parameters are read in using the interface (23) which is integrated into the power module (11).

26. An intelligent control and regulating device according to claim 31, wherein the values measured by the internal (20, 21) and external sensors (17, 18, 19) are calculated as process characteristic magnitudes inside the power module (11) and transmitted to the central control unit (14) using the interface module (12).

27. An intelligent control and regulating device according to Claim 30, wherein correction data for an improved quality of control are stored in the power module (11).

28. An intelligent control and regulating device according to Claim 29,
wherein the actuator is connected to a valve (8), and wherein, subsequent to connecting the actuator to the valve

## Revendications

1. Dispositif intelligent de commande et de réglage en particulier pour l'emploi dans une technologie de processus pour les substances et fluides en écoulement, technologie qui est intégrée dans le carter d'un servomoteur ou qui est monté sur le servomoteur et qui présente un dispositif de réglage qui commande en fonction de signaux de capteur un organe de réglage par l'intermédiaire d'un dispositif d'énergie auxiliaire, **caractérisé en ce que** le dispositif de réglage est un régulateur de processus (15) qui reçoit des signaux d'entrée de réglage de capteurs externes (17, 18, 19).

2. Dispositif intelligent de commande et de réglage selon la revendication 1, **caractérisé en ce que** le régulateur de processus (15) fait partie d'un module de puissance (11) qui est relié par un module d'interface bidirectionnel (12) à un dispositif de commande supérieur (14).

3. Dispositif intelligent de commande et de réglage selon la revendication 2, **caractérisé en ce que** le module de puissance (11) présente outre le régulateur de processus (15) une commande d'énergie auxiliaire (25) et est relié par des entrées à des capteurs internes (20, 21) saisissant des données spécifiques d'entraînement et à des capteurs externes (17, 18, 19) fournissant des données spécifiques au processus.

4. Dispositif intelligent de commande et de réglage selon la revendication 2 ou 3, **caractérisé en ce que** le module de puissance (11) est alimenté en énergie par un transformateur de tension de secteur modulaire (10).

5. Dispositif intelligent de commande et de réglage selon la revendication 2, **caractérisé en ce que** le module d'interface (12) est enfichable.

6. Dispositif intelligent de commande et de réglage selon la revendication 2 ou 5, **caractérisé en ce que** l'échange de données avec le dispositif de commande supérieur (14) s'effectue par le module d'interface (12) au moyen de signaux analogiques et/ou binaires.

7. Dispositif intelligent de commande et de réglage selon la revendication 2 ou 5, **caractérisé en ce que** l'échange de données avec le dispositif de commande supérieur (14) s'effectue par le module d'interface (12) par une transmission sérielle de données par un bus de données.

8. Dispositif intelligent de commande et de réglage selon la revendication 2, **caractérisé en ce que** le module d'interface (12) présente pour l'établissement de la connexion électrique avec l'environnement un relais sans potentiel.

9. Dispositif intelligent de commande et de réglage selon l'une des revendications précédentes, **caractérisé en ce que** le régulateur de processus (15) est paramétré avec des données spécifiques à l'entraînement après le premier montage des modules (10, 11, 12) avec le servomoteur.

10. Dispositif intelligent de commande et de réglage selon la revendication 9, **caractérisé en ce que** le régulateur de processus (15) est un régulateur proportionnel, intégral ou à action proportionnelle, intégrale et dérivée

11. Dispositif intelligent de commande et de réglage selon, la revendication 10, **caractérisé en ce que** dans le cas d'un régulateur à action proportionnelle, intégrale et dérivée, la zone de proportionnalité, le temps de dérive et de compensation sont paramétrables indépendamment les uns des autres après le premier montage.

12. Dispositif intelligent de commande et de réglage selon la revendication 9, 10 ou 11, **caractérisé en ce que** le régulateur de processus (15) est réalisé par un microprocesseur.

13. Dispositif intelligent de commande et de réglage selon la revendication 1, **caractérisé en ce qu'**un dispositif opérateur (13) destiné à la commande du servomoteur et/ou au paramétrage des fonctions d'entraînement est relié au module de puissance (11), en particulier au régulateur de processus (15).

14. Dispositif intelligent de commande et de réglage selon la revendication 13, **caractérisé en ce que** le dispositif opérateur (13) est monté sur le servomoteur.

15. Dispositif intelligent de commande et de réglage selon la revendication 13, **caractérisé en ce que** le dispositif opérateur (13) est relié de manière enfichable au servomoteur.

16. Dispositif intelligent de commande et de réglage selon la revendication 13, **caractérisé en ce que** le dispositif opérateur (13) est prévu pour un montage murale stationnaire et est relié par un câble au module de puissance (11).

17. Dispositif intelligent de commande et de réglage selon la revendication 3, **caractérisé en ce que** le régulateur de processus (15) est relié à des capteurs internes (20, 21) pour la surveillance de la position d'entraînement et/ou des couples de rotation et des forces de réglage générés à la dérive du servomoteur.

18. Dispositif intelligent de commande et de réglage salon la revendication 3, **caractérisé en ce que** le régulateur de processus (15) agit par la commande d'énergie auxiliaire (24) sur le dispositif d'énergie auxiliaire (2).

19. Dispositif intelligent de commande et de réglage selon la revendication 18, **caractérisé en ce que** le dispositif d'énergie auxiliaire (2) est un moteur à commande électronique.

20. Dispositif intelligent de commande et de réglage selon la revendication 19, **caractérisé en ce que** le moteur (2) est un moteur à courant continu, la saisie du couple de rotation ou de la force de réglage s'effectuant par le courant de moteur.

21. Dispositif intelligent de commande et de réglage selon la revendication 18, **caractérisé en ce que** le dispositif d'énergie auxiliaire (2) est un dispositif pneumatique.

22. Dispositif intelligent de commande et de réglage, salon la revendication 18, **caractérisé en ce que** le dispositif d'énergie auxiliaire (2) est un dispositif hydraulique.

23. Dispositif intelligent de commande et de réglage selon l'une des revendications précédentes, **caractérisé en ce que** le module de puissance (11) stocke des données internes spécifiques à l'entraînement dans un but de diagnostic de manière imperdable dans une mémoire (22).

24. Dispositif intelligent de commande et de réglage selon la revendication 23, **caractérisé en ce que** les données internes mémorisées spécifiques à l'entraînement sont consultées au moyen d'une interface sérielle (23) intégrée dans le module de puissance (11) ou par le module d'interface (12) via un bus de données.

25. Dispositif intelligent de commande et de réglage selon la revendication 23 **caractérisé en ce que** des paramètres d'entraînement sont consultés par l'interface (23) intégrée dans le module de puissance (11).

26. Dispositif intelligent de commande et de réglage selon la revendication 3, **caractérisé en ce que** les valeurs mesurées par des capteurs internes (20, 21) et externes (17, 18, 19) sont calculées dans le module de puissance (11) en tant que grandeurs caractéristiques de processus et sont transmises par le module d'interface (12) au dispositif de commande supérieur (14) pour y être traitées.

27. Dispositif intelligent de commande et de réglage selon la revendication 2, **caractérisé en ce que** dans le module de puissance des données de correction sont stockées pour l'amélioration de la qualité de réglage.

28. Dispositif intelligent de commande et de réglage selon l'une des revendications précédentes, **caractérisé en ce qu'**après le montage du servomoteur sur l'organe de réglage (8), une opération d'initialisation automatique s'effectue pendant laquelle le servomoteur est synchronisé avec l'organe de règlage (8) en particulier pour la saisie de position définitive.
